# EUROPÄISCHE PATENTSCHRIFT

(11) **EP 2 273 287 B1**
(45) Veröffentlichungstag und Bekanntmachung des Hinweises auf die Patenterteilung: **11.09.2013**
(21) Anmeldenummer: 09009016.8
(22) Anmeldetag: 10.07.2009
(51) Int. Cl.: G01V 8/12

(54) **Optoelektronische Sensoranordnung**
Optoelectronic sensor assembly
Dispositif de capteur optoélectronique

(43) Veröffentlichungstag der Anmeldung: 12.01.2011
(73) Patentinhaber: SICK AG, 79183 Waldkirch (DE)
(72) Erfinder: Brodd, Dieter, 79241 Ihringen (DE); Schöllhorn, Wolfgang, 68600 Biesheim (FR)
(74) Vertreter: Modrow, Stephanie

(56) Entgegenhaltungen:
- EP-A- 0 353 646
- EP-A- 1 811 427
- DE-A1- 3 733 878
- DE-A1- 4 334 785
- DE-A1- 4 342 328
- DE-U1-202006 003 313

## Beschreibung

Die Erfindung betrifft eine optoelektronische Sensoranordnung gemäß dem Oberbegriff des Patentanspruchs 1.

Bekannte optoelektronische Sensoranordnungen wie beispielsweise Lichtschranken, Lichttaster, Lichtvorhänge und Lichtgitter weisen ein Gehäuse auf, in welchem wenigstens ein Lichtsender und/oder ein Lichtempfänger angeordnet ist, wobei das Gehäuse in einer Seitenwand wenigstens eine Frontscheibe aufweist, welche für das von dem Lichtsender ausgesandte Licht oder das von dem Lichtempfänger detektierte Licht durchlässig ist. Dabei bezieht sich der Begriff "Licht" nicht nur auf sichtbares Licht, sondern auf elektromagnetische Wellen unterschiedlichster Frequenzen, die für den Aufbau einer optoelektronischen Sensoreinrichtung geeignet sind. Je nach Ausgestaltung der optoelektronischen Sensoranordnung können sich in dem Gehäuse entweder nur ein oder mehrere Lichtsender oder nur ein oder mehrere Lichtempfänger befinden, wie beispielsweise bei Einweglichtschranken oder Einweglichtgittern. Es ist jedoch auch möglich, in einem Gehäuse der optoelektronischen Sensoranordnung sowohl wenigstens einen Lichtsender als auch wenigstens einen Lichtempfänger anzuordnen, wie beispielsweise bei Lichttastern, Reflexionslichtschranken oder Reflexionslichtgittern.

Derartige optoelektronische Sensoranordnungen werden entweder an Gebäudewänden oder auch an Rahmengestellen von Maschinen oder Anlagen befestigt, um entsprechende Überwachungsbereiche abzusichern. Dazu muss an dem Gehäuse eine entsprechende Befestigungsvorrichtung angeordnet werden, welche in der Regel einen hohen Platzbedarf aufweist. Weiterhin müssen an dem Gehäuse herkömmliche Steckverbinder angeordnet sein, um die Stromzufuhr und die Datenleitungen an die optoelektronische Sensoranordnung zu führen. Dies führt dazu, dass die Gehäuse der optoelektronischen Sensoranordnungen eine bestimmte Mindestgröße aufweisen müssen und daher die Gehäuse nicht beliebig miniaturisiert werden können. Zudem ist die Montage oft aufwändig und erlaubt kein einfaches Auswechseln eines Lichtgitters beispielsweise zur Reparatur und zum Einbau eines leistungsfähigeren Lichtgitters.

Aus der DE 10 2007 014 170 A1 ist es bekannt, eine optoelektronische Sensoranordnung vorzusehen, die ein an oder in einem Rahmenprofil angeordnetes Gehäuse, in dem mindestens ein Lichtsender und/oder Lichtempfänger angeordnet sind, aufweist. Dabei wird die elektrische Kontaktierung des Gehäuses über ein im Rahmenprofil angeordnetes Kontaktelement sichergestellt. Das Rahmenprofil kann dabei ferner Anzeige- oder Bedienelemente der Sensoranordnung aufweisen oder Teile der Elektronik enthalten. Bei einer solchen Anordnung ist aber im Falle eines Defekts stets ein Kompletttausch für das gesamte Gehäuse mit allen darin enthaltenen Komponenten notwendig. Ferner ist es nötig, wegen der hohen Anforderungen an die Justagepräzision einer optoelektronischen Sensoranordnung das gesamte Gehäuse mit hoher Winkelgenauigkeit und Maßhaltigkeit zu fertigen. DE 37 33 878 A1 beschreibt eine optoelektronische Sensoranordnung gemäß dem Oberbegriff des Anspruchs 1.

Die Aufgabe der Erfindung besteht daher darin, eine kostengünstige, montage- und wartungsfreundliche Befestigungsmöglichkeit für eine optoelektronische Sensoranordnung bereitzustellen.

Diese Aufgabe wird gelöst durch eine optoelektronische Sensoranordnung mit den Merkmalen des Patentanspruchs 1. Vorteilhafte Ausgestaltungen und Weiterbildungen der Erfindung sind in den Unteransprüchen angegeben.

Die erfindungsgemäße optoelektronische Sensoranordnung weist wenigstens einem Lichtsender und/oder wenigstens einem Lichtempfänger, mindestens einer Steuerelektronik für den wenigstens einen Lichtsender und/oder Lichtempfänger, und mindestens einer Auswerteelektronik für vom mindestens einen Lichtempfänger empfangene Signale auf. Zumindest diese Komponenten sind so zwischen einem Optikgehäuse und einem mit dem Optikgehäuse lösbar mechanisch und elektrisch verbundenen Gondelgehäuse aufgeteilt, dass das Optikgehäuse einerseits das mindestens den wenigstens einen Lichtsender und/oder den wenigstens einen Lichtempfänger und andererseits die mindestens eine Steuerelektronik für den wenigstens einen Lichtsender und/oder Lichtempfänger beinhaltet, und dass das Gondelgehäuse mindestens die Auswerteelektronik enthält.

Durch diese Aufteilung der Komponenten werden eine Reihe wichtiger Vorteile erzielt. Einerseits erlaubt der modulare Aufbau den jeweils separaten Austausch von Optikgehäuse oder Gondelgehäuse, was zu kostengünstigeren Austauschteilen führt. Weitere Kostenersparnis wird dadurch erzielt, dass die für eine exakte Justage notwendige hohe Maßhaltigkeit und Winkeltreue lediglich noch für das Optikgehäuse eingehalten werden muss, das zudem einfacher blindbereichsfrei und gut abgedichtet herzustellen ist als bei einer integrierten Lösung. Insgesamt ist es möglich, den durch die Teile umbauten Raum zu verringern, was, einerseits als Folge der damit verbundenen Materialersparnis eine weitere Kostenoptimierung mit sich bringt und andererseits ermöglicht, die Variabilität der Anordnung zu erhöhen, da Platz für Kabeladapter oder Umsetzer auf andere Stecker gewonnen wird.

In einer besonders vorteilhaften Ausführungsform der optoelektronischen Sensoranordnung, die zu einer einfachen und sicheren Installation der optoelektronischen Sensoranordnung bei gleichzeitiger einfacher Auswechselbarkeit von deren Komponenten fürt, ist ein Halterahmen vorgesehen, mit dem das Optikgehäuse und/oder das Gondelgehäuse durch insgesamt wenigstens ein Befestigungselement mit dem Halterahmen lösbar verbunden ist. In einer vorteilhaften Ausgestaltung sind das Befestigungselement oder die Befestigungselemente als Rast-, Klemm- oder Schnappmechanismus oder als form- oder kraftschlüssige Verbindung ausgebildet. Dadurch wird ein einfacher Austausch der betreffenden Teile erleichtert.

Es hat sich ferner als sinnvoll erwiesen, wenn an der optoelektronische Sensoranordnung ein Benutzer-Interface mit einem Anzeigeelement am Optikgehäuse oder am Gondelgehäuse vorgesehen ist. Dies ermöglicht eine direkte Weitergabe von Statusinformationen an den Benutzer. Da ein direktes Ablesen des Anzeigeelements in Abhängigkeit von der jeweiligen Installation der optoelektronischen Sensoranordnung möglicherweise nicht möglich ist, ist es vorteilhaft, entsprechende Informationen insbesondere zur Diagnostik der optoelektronischen Sensoranordnung mittels eines Lichtleiters in eine andere Richtung umzulenken.

Eine weitere vorteilhafte Ausgestaltung der Erfindung liegt darin, mindestens ein Bedienelement am Optik- und/oder Gondelgehäuse vorzusehen, beispielsweise als Bestandteil des Benutzer-Interface. Dieses Bedienelement dient als Schalt- oder Steuerelement, um eine manuelle Beeinflussung, insbesondere eine manuelle Programmierung am Gerät vornehmen zu können.

Oft ist es aber auch sinnvoll, als Möglichkeit zur Speicherung von Konfiguration und Betriebsmodus ein Speichermodul, beispielsweise ein EEPROM im Optikgehäuse oder im Gondelgehäuse vorzusehen, in das in installiertem Zustand oder vor seiner Installation ein Kommunikationsdatensatz eingeschrieben worden ist. Insbesondere bringt es erhebliche Vorteile bei der Wartung, wenn sowohl im Optikgehäuse als auch im Gondelgehäuse ein Speichermodul zur Speicherung solcher Informationen vorgesehen ist, da so beim Austausch eines dieser Gehäuse mitsamt den in ihm enthaltenen Baugruppen eine Neupogrammierung der optoelektronischen Sensoranordnung entfallen kann.

Eine besonders kostengünstige Herstellungsform für das Gondelgehäuse gemäß einer bevorzugten Ausgestaltung der Erfindung ist es, dieses Gehäuse als Spritzgussgehäuse mit eingespritztem Stecker anzufertigen. Bei den bisher bekannten Gehäusen, die auch optische Komponenten der optoelektronischen Sensoranordnung enthielten, war eine derartige Herstellungsweise wegen der hohen Anforderungen an Maßhaltigkeit und Winkeltreue für diese Komponenten aufnehmende Gehäuse nicht oder nur bei Inkaufnahme erheblicher Probleme bei der Justage der optoelektronischen Sensoranordnungen akzeptabel.

Eine weitere vorteilhafte Ausgestaltung einer optoelektronische Sensoranordnung kann erreicht werden, wenn Optikgehäuse und Gondelgehäuse über eine symmetrische Verbindung miteinander verbunden sind. Dadurch kann die Orientierung des Gondelgehäuses relativ zum Optikgehäuse variiert werden, was je nach den lokalen Installationsanforderungen die Kabelführung und/oder die Zugänglichkeit etwaig vorgesehener Anzeige- und Bedienelemente erheblich erleichtern kann.

Eine besonders kompakte Variante der optoelektronische Sensoranordnung erhält man, wenn der Halterahmen als Hohlprofil ausgebildet ist, welches das Gondelgehäuse zumindest teilweise aufnimmt .

Eine weitere vorteilhafte Ausgestaltung der Erfindung liegt darin, dass ein Businterface und/oder ein Mutingmodul und /oder ein Display über eine oder mehrere weitere Verbindungen mit dem Optikgehäuse verbunden sind. Dies erlaubt, insbesondere bei Vor-Ort-Wartung, eine detaillierte Überprüfung der optischen Komponenten.

Eine hinsichtlich des Material- und Platzbedarfs optimierte Ausgestaltung der Erfindung wird dann erreicht, wenn das Gondelgehäuse nur die Auswerteelektronik enthält, so dass das Gondelgehäuse kleiner als das Optikgehäuse ist. Andererseits führt es zu einem besonders kompakte Optikgehäuse, wenn dieses nur erstens den wenigstens einen Lichtsender und/oder den wenigstens einen Lichtempfänger und zweitens die mindestens eine Steuerelektronik für den wenigstens einen Lichtsender und/oder Lichtempfänger beinhaltet. Dies bringt es mit sich, dass das wegen der hohen Maßhaltigkeit und Winkeltreue teuer und mit hohem Aufwand herzustellende Teil kleiner und somit günstiger wird.

Die Erfindung wird anhand der nachfolgenden Figur weiter erläutert. Es zeigt:

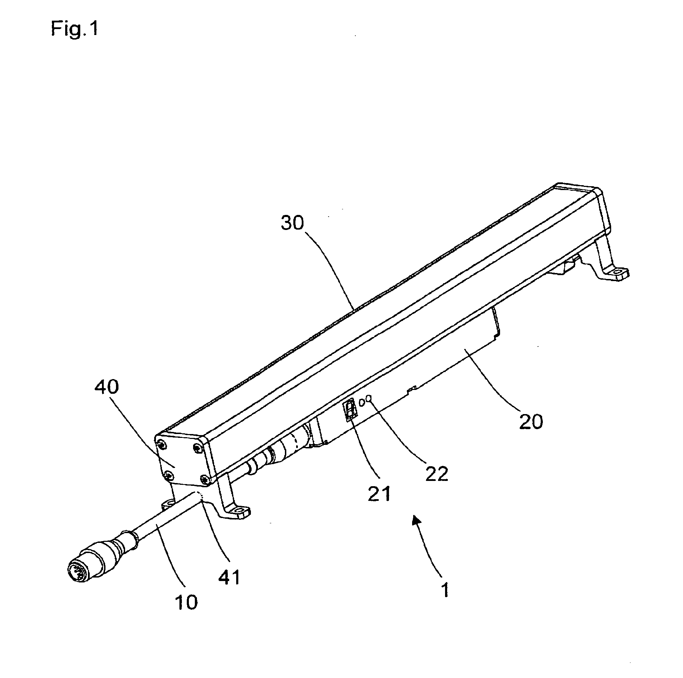

- Figur 1: eine perspektivische Darstellung eines Ausfüh- rungsbeispiels der Erfindung,

Figur 1 zeigt eine perspektivische Darstellung eines Ausführungsbeispiels der Erfindung. Zu erkennen sind eine optoelektronische Sensoranordnung 1, ein Optikgehäuse 10, ein Gondelgehäuse 20 mit ein Benutzer-Interface mit einem Anzeigeelement 21 und einem Bedienelement 22, ein Halterahmen 30 und ein Befestigungselement 40, das am einem Ende des Halterahmens 30 befestigt ist, mit einer Klemmöffnung 41. Das Optikgehäuse 10 und das Gondelgehäuse 20 sind lösbar miteinander verbunden.

Die Verbindung zwischen dem Halterahmen 30 und der optoelektronischen Sensoranordnung 1 ist dadurch hergestellt, dass das Optikgehäuse 10 in der Klemmöffnung 41 verklemmt ist.

### Bezugszeichenliste

- 1: optoelektronische Sensoranordnung

- 10: Optikgehäuse
- 20: Gondelgehäuse
- 21: Anzeigeelement
- 22: Bedienelement
- 30: Halterahmen
- 40: Befestigungselement
- 41: Klemmöffnung

## Patentansprüche

1. Optoelektronische Sensoranordnung (1) mit wenigstens einem Lichtsender und/oder wenigstens einem Lichtempfänger, einer Steuerelektronik für den wenigstens einen Lichtsender und/oder Lichtempfänger, und mindestens einer Auswerteelektronik für vom mindestens einen Lichtempfänger empfangene Signale,
**dadurch gekennzeichnet, dass** die optoelektronische Sensoranordnung (1) ein Optikgehäuse (10), das mindestens den wenigstens einen Lichtsender und/oder den wenigstens einen Lichtempfänger und die Steuerelektronik für den wenigstens einen Lichtsender und/oder Lichtempfänger beinhaltet, und ein mit diesem lösbar mechanisch und elektrisch verbundenes zweites Gehäuse (20), das mindestens die Auswerteelektronik enthält, aufweist, und dass an das zweite Gehäuse (20) geringere Anforderungen an Maßhaltigkeit und Winkeltreue gestellt werden als an das Optikgehäuse (10).

2. Optoelektronische Sensoranordnung (1) nach Anspruch 1,
**dadurch gekennzeichnet, dass** ein Halterahmen (30) vorgesehen ist und dass das Optikgehäuse und/oder das Gondelgehäuse durch insgesamt wenigstens ein Befestigungselement (40) mit dem Halterahmen (30) lösbar verbunden ist.

3. Optoelektronische Sensoranordnung (1) nach Anspruch 2,
**dadurch gekennzeichnet, dass** das Befestigungselement (40) oder die Befestigungselemente (40) als Rast-, Klemm- oder Schnappmechanismus oder als form- oder kraftschlüssige Verbindung ausgebildet sind.

4. Optoelektronische Sensoranordnung (1) nach einem der vorhergehenden Ansprüche,
**dadurch gekennzeichnet, dass** ein Benutzer-Interface mit einem Anzeigeelement (21) am Optikgehäuse (10) oder am Gondelgehäuse (20) vorgesehen ist.

5. Optoelektronische Sensoranordnung nach Anspruch 4,
**dadurch gekennzeichnet, dass** ein Lichtleiter vorgesehen ist, der das Signal des Anzeigeelements (21) in eine andere Richtung als die Richtung, in die das Anzeigeelement (21) zeigt, umlenkt.

6. Optoelektronische Sensoranordnung (1) nach einem der vorhergehenden Ansprüche,
**dadurch gekennzeichnet, dass** ein Bedienelement (22) am Optikgehäuse (10) oder am Gondelgehäuse (20) vorgesehen ist.

7. Optoelektronische Sensoranordnung (1) nach einem der vorhergehenden Ansprüche,
**dadurch gekennzeichnet, dass** im Optikgehäuse (10) und/oder im Gondelgehäuse (20) ein Speichermodul für die Konfiguration des optoelektronischen Sensors (1) angeordnet ist.

8. Optoelektronische Sensoranordnung (1) nach einem der vorhergehenden Ansprüche,
**dadurch gekennzeichnet, dass** das Gondelgehäuse (20) ein Spritzgussgehäuse mit eingespritztem Stecker ist.

9. Optoelektronische Sensoranordnung (1) nach einem der vorhergehenden Ansprüche,
**dadurch gekennzeichnet, dass** Optikgehäuse (10) und Gondelgehäuse (20) über eine symmetrische Verbindung miteinander verbunden sind.

10. Optoelektronische Sensoranordnung (1) nach einem der vorhergehenden Ansprüche,
**dadurch gekennzeichnet, dass** der Halterahmen (30) als Hohlprofil ausgebildet ist, welches das Gondelgehäuse (20) zumindest teilweise aufnimmt.

11. Optoelektronische Sensoranordnung (1) nach einem der vorhergehenden Ansprüche,
**dadurch gekennzeichnet, dass** ein Businterface und/oder ein Mutingmodul und /oder ein Display über eine oder mehrere weitere Verbindungen mit dem Optikgehäuse (10) verbunden sind.

12. Optoelektronische Sensoranordnung (1) nach einem der vorhergehenden Ansprüche,
**dadurch gekennzeichnet, dass** das Gondelgehäuse (20) nur die Auswerteelektronik enthält.

13. Optoelektronische Sensoranordnung (1) nach einem der Ansprüche 1 bis 11,
**dadurch gekennzeichnet, dass** das Optikgehäuse (10) nur den wenigstens einen Lichtsender und/oder den wenigstens einen Lichtempfänger und die mindestens eine Steuerelektronik für den wenigstens einen Lichtsender und/oder Lichtempfänger beinhaltet.

## Claims

1. Optoelectronic sensor arrangement (1) having at least one light transmitter and/or at least one light receiver, an electronic control unit for the at least one light transmitter and/or light receiver, and at least one electronic evaluation unit for signals received by the at least one light receiver,
**characterised in that** the optoelectronic sensor arrangement (1) has an optics housing (10) which includes at least the at least one light transmitter and/or the at least one light receiver and the electronic control unit for the at least one light transmitter and/or light receiver, and a second housing (20) which is connected mechanically and electrically in a detachable manner and contains at least the electronic evaluation unit, and **in that** lower requirements of dimensional stability and conformality are imposed on the second housing (20) than on the optics housing (10).

2. Optoelectronic sensor arrangement (1) according to claim 1,
**characterised in that** a holding frame (30) is provided and **in that** the optics housing and/or the gondola housing is/are connected to the holding frame (30) in a detachable manner by a total of at least one fixing element (40).

3. Optoelectronic sensor arrangement (1) according to claim 2,
**characterised in that** the fixing element (40) or the fixing elements (40) is/are constructed as a catch, clamping or snap-on mechanism or as a positive or non-positive connection.

4. Optoelectronic sensor arrangement (1) according to one of the preceding claims,
**characterised in that** a user interface having a display element (21) is provided on the optics housing (10) or on the gondola housing (20).

5. Optoelectronic sensor arrangement according to claim 4,
**characterised in that** a light conductor is provided which deflects the signal of the display element (21) into a different direction to the direction into which the display element (21) points.

6. Optoelectronic sensor arrangement (1) according to one of the preceding claims,
**characterised in that** an operator element (22) is provided on the optics housing (10) or on the gondola housing (20).

7. Optoelectronic sensor arrangement (1) according to one of the preceding claims,
**characterised in that** a memory module for the configuration of the optoelectronic sensor (1) is arranged in the optics housing (10) and/or in the gondola housing (20).

8. Optoelectronic sensor arrangement (1) according to one of the preceding claims,
**characterised in that** the gondola housing (20) is an injection moulded housing having an injection moulded plug connector.

9. Optoelectronic sensor arrangement (1) according to one of the preceding claims,
**characterised in that** the optics housing (10) and gondola housing (20) are connected to one another via a symmetric connection.

10. Optoelectronic sensor arrangement (1) according to one of the preceding claims,
**characterised in that** the holding frame (30) is constructed as a hollow profile which at least partly accommodates the gondola housing (20).

11. Optoelectronic sensor arrangement (1) according to one of the preceding claims,
**characterised in that** a bus interface and/or a muting module and/or a display is/are connected to the optics housing (10) via one or more further connections.

12. Optoelectronic sensor arrangement (1) according to one of the preceding claims,
**characterised in that** the gondola housing (20) contains only the electronic evaluation unit.

13. Optoelectronic sensor arrangement (1) according to one of claims 1 to 11,
**characterised in that** the optics housing (10) includes only the at least one light transmitter and/or the at least one light receiver and the at least one electronic control unit for the at least one light transmitter and/or light receiver.

## Revendications

1. Dispositif de capteur optoélectronique (1) comportant au moins un émetteur de lumière et/ou au moins un récepteur de lumière, une électronique de commande de cet émetteur de lumière et/ou de ce récepteur de lumière, et au moins une électronique d'exploitation de signaux reçus par au moins un récepteur de lumière,
**caractérisé en ce que**
le dispositif de capteur optoélectronique (1) comporte un boitier optique (10) qui renferme au moins le ou les émetteur(s) de lumière et/ou le ou les récepteur(s) de lumière ainsi que l'électronique de commande de ce ou de ces émetteur(s) de lumière et/ou de ce ou de ces récepteur(s) de lumière ainsi qu'un second boitier (20) relié électriquement et mécaniquement de façon amovible au premier boitier et qui renferme au moins l'électronique d'exploitation, et que, le second boitier (20) doit satisfaire à des exigences plus faibles de respect strict des dimensions et de conformité angulaire que le boitier optique (10).

2. Dispositif de capteur optoélectronique (1) conforme à la revendication 1,
**caractérisé en ce qu'**
il comporte un cadre support (30), et
le boitier optique et/ou le boitier formant nacelle sont reliés de façon amovible au cadre support (30) par globalement au moins un élément de fixation (40).

3. Dispositif de capteur optoélectronique (1) conforme à la revendication 2,
**caractérisé en ce que**
le ou les élément(s) de fixation (40) et/ou sont réalisés sous la forme de mécanismes d'encliquetage, de blocage ou à crans, ou sous la forme d'une liaison par la forme ou par la force.

4. Dispositif de capteur optoélectronique (1) conforme à l'une des revendications précédentes,
**caractérisé en ce qu'**
il comporte une interface avec un utilisateur équipée d'un élément d'affichage (21) situé sur le boitier optique (10) ou sur le boitier formant nacelle (20).

5. Dispositif de capteur optoélectronique conforme à la revendication 4,
**caractérisé en ce qu'**
il comporte un conducteur optique qui dévie le signal de l'élément d'affichage (21) dans une direction autre que la direction d'affichage de l'élément d'affichage (21).

6. Dispositif de capteur optoélectronique conforme à l'une des revendications précédentes,
**caractérisé en ce qu'**
il comporte un élément d'actionnement (22) situé sur le boitier optique (10) ou sur le boitier formant nacelle (20).

7. Dispositif de capteur optoélectronique (1) conforme à l'une des revendications précédentes,
**caractérisé en ce que**
dans le boitier optique (10) et/ou dans le boitier formant nacelle (20) est monté un module de mémoire permettant la conformation du capteur optoélectronique (1).

8. Dispositif de capteur optoélectronique (1) conforme à l'une des revendications précédentes,
**caractérisé en ce que**
le boitier formant nacelle (20) est un boitier moulé par injection équipé d'une fiche injectée.

9. Dispositif de capteur optoélectronique (1) conforme à l'une des revendications précédentes,
**caractérisé en ce que**
le boitier optique (10) et le boitier formant nacelle (20) sont reliés par une liaison symétrique.

10. Dispositif de capteur optoélectronique (1) conforme à l'une des revendications précédentes,
**caractérisé en ce que**
le cadre support (30) est réalisé sous la forme d'un profilé creux qui reçoit au moins partiellement le boitier formant nacelle (20).

11. Dispositif de capteur optoélectronique (1) conforme à l'une des revendications précédentes,
**caractérisé en ce qu'**
une interface de bus et/ou un module d'inhibition et/ou un organe d'affichage sont reliés au boitier optique (10) par un ou plusieurs autre(s) organe(s) de liaison.

12. Dispositif de capteur optoélectronique (1) conforme à l'une des revendications précédentes,
**caractérisé en ce que**
le boitier formant nacelle (20) ne renferme que l'électronique d'exploitation.

13. Dispositif de capteur optoélectronique (1) conforme à l'une des revendications 1 à 11,
**caractérisé en ce que**
le boitier optique (10) ne renferme que le ou les émetteur(s) de lumière et/ou le ou les récepteur(s) de lumière et la ou les électronique(s) de commande pour le ou les émetteur(s) de lumière et/ou le ou les récepteur(s) de lumière.
